# EUROPEAN PATENT SPECIFICATION

(11) **EP 2 956 469 B1**
(45) Date of publication and mention of the grant of the patent: **05.12.2018**
(21) Application number: 14751891.4
(22) Date of filing: 18.02.2014
(51) Int. Cl.: C07K 1/36, A23J 1/20, A23C 9/142, A23J 3/08

(54) **METHODS AND COMPOSITIONS FOR PROTEIN CONCENTRATION**
VERFAHREN UND ZUSAMMENSETZUNGEN ZUR PROTEINKONZENTRATION
PROCÉDÉS ET COMPOSITIONS POUR LA CONCENTRATION DE PROTÉINES

(30) Priority: 18.02.2013 US 201361766010 P
(43) Date of publication of application: 23.12.2015
(73) Proprietor: Wisconsin Alumni Research Foundation, Madison, WI 53726 (US); Dairy Management Inc., Rosemont, IL 60018 (US)
(72) Inventor: ETZEL, Mark, R., Madison, WI 53703 (US); ARUNKUMAR, Abhiram, Mumbai Maharashtra 410210 (IN); AGARWAL, Shantanu, Rosemont, IL 60018 (US)
(74) Representative: Potter Clarkson LLP
(86) International application number: PCT/US2014/016790
(87) International publication number: WO 2014/127339

(56) References cited:
- US-A- 5 340 480
- US-A- 5 387 345
- US-A- 5 478 470
- US-A- 5 711 881
- US-A- 5 919 370
- US-A1- 2006 157 412
- US-A1- 2012 001 002
- US-A1- 2012 029 165
- US-B1- 6 352 642
- SAXENA ET AL: "pH controlled selective transport of proteins through charged ultrafilter membranes under coupled driving forces: An efficient process for protein separation", JOURNAL OF MEMBRANE SCIENCE, ELSEVIER BV, NL, vol. 299, no. 1-2, 22 June 2007 (2007-06-22), pages 211-221, XP022130746, ISSN: 0376-7388, DOI: 10.1016/J.MEMSCI.2007.04.043
- CHEANG ET AL.: 'Separation of a-Lactalbumin and beta-Lactoglobulin Using Membrane Ultrafiltration' BIOTECHNOLOGY AND BIOENGINEERING vol. 83, no. ISS. 2, 14 May 2003, pages 201 - 209, XP055281334
- POULIN ET AL.: 'Simultaneous separation of acid and basic bioactive peptides by electrodialysis with ultrafiltration membrane' JOURNAL OF BIOTECHNOLOGY vol. 123, 18 January 2006, pages 314 - 328, XP024956792

## Description

### BACKGROUND OF THE INVENTION

### 1. Field of the Invention

The present invention relates generally to the field of protein chemistry. More particularly, it provides a process of concentrating milk proteins using negatively charged ultrafiltration.

### 2. Description of Related Art

Milk proteins are value-added ingredients in foods. Milk proteins must be concentrated to remove water prior to spray drying. Ultrafiltration membranes are used for this purpose because not only is water removed, but also minerals, lactose, and non-protein nitrogen. This results in a spray dried milk protein powder that is higher in protein and more valuable than it would be if just water was removed. For example, removal of just water from milk prior to spray drying results in a milk powder where the solids content is not different than in the milk. Using ultrafiltration instead results in the removal of water and also lactose, minerals, and non-protein nitrogen, making the spray dried powder a high protein food ingredient called milk protein concentrate. Similarly for cheese whey, use of ultrafiltration for concentration results in a whey powder of a higher protein content than it would have been if only water was removed, and the resulting product is called whey protein concentrate.

High protein foods address consumer needs for foods to stimulate muscle protein synthesis and to fight sarcopenia. To fight sarcopenia, current advice is to increase protein intake to about 90 g of protein per day or 30 g at each meal. High-protein beverages and protein bars contain 30 g of whey or milk protein. Milk serum protein concentrates made directly from milk are a new generation of dairy ingredients. As a source of purified proteins, milk has many advantages over using cheese whey. Cheese whey contains all the byproducts of cheese making such as enzymes, colorants, starter cultures, lipolysis and proteolysis products including glycomacropeptide (GMP), and lipids. Milk is a more consistent and pure feed stream than cheese whey, the proteins are more native, and the absence of GMP, a nutritionally incomplete protein, makes protein concentrates made directly from milk more suitable for foods targeting muscle health.

Uncharged ultrafiltration membranes have been used traditionally to concentrate dairy proteins. In order to not lose protein by passage through the membranes, tight membranes are selected, but these membranes also have low flow rates per unit area (low flux). Using a looser membrane allows operation at higher flux, but at the expense of higher losses of protein. It has not been possible to date to obtain high flux and low losses using uncharged ultrafiltration membranes. Previously, the inventor has examined the use of positively charged membranes to increase the selectivity of ultrafiltration and allow the fractionation of proteins from cheese whey. However, the use of charged ultrafiltration membranes - positive or negative - in the concentration of dairy proteins has not been examined.

SAXENA ET AL: "pH controlled selective transport of proteins through charged ultrafilter membranes under coupled driving forces: An efficient process for protein separation", in JOURNAL OF MEMBRANE SCIENCE, ELSEVIER BV, NL, vol. 299, no. 1-2, 22 June 2007, pages 211-221 discusses the use of negatively charged ultrafiltration membranes in protein fractionation.

US 2012/029165 A1 discloses charged ultrafiltration membranes used for whey protein isolation.

### SUMMARY OF THE INVENTION

Thus, in accordance with the present invention, there is provided a method of concentrating dairy proteins comprising (a) providing a protein mixture containing one or more dairy proteins; (b) contacting said mixture with a negatively charged ultrafiltration membrane wherein said ultrafiltration membrane has a molecular weight cutoff of 100 kDa or greater and a negative charge of more than 3 milliequivalents per square meter, wherein said method produces a hydraulic permeability of more than 120 Liters per hour per square meter per bar and a protein sieving coefficient of no more than about 0.05. The protein mixture may be a milk protein mixture, such as one comprising a casein. The protein mixture may be a whey or serum protein mixture, such as one comprising one or more of beta-lactoglobulin, alpha-lactalbumin, IgG, IgA, IgM, a glycomacropeptide, bovine serum albumin, lactoferrin, lactoperoxidase and/or lysozyme. The protein mixture may comprise one or more of glycomacropeptide (GMP), alpha-lactalbumin (ALA), immunoglobulin G (IgG), and/or beta-lactoglobulin (BLG). The method may further comprise adjusting the pH of the protein mixture prior to step (b), or further comprising adjusting the conductivity of the protein mixture prior to step (b), or both.

The negatively charged ultrafiltration membrane may be a molecular weight cutoff of 100-1000 kDa, 100-1000 kDa, 300-100 kDa or 500-1000kDa, such as a molecular weight cutoff of about 300 kDa. The ultrafiltration may achieve a hydraulic permeability of about 200 Liters per hour per square meter per bar, about 250 Liters per hour per square meter per bar, or about 300 Liters per hour per square meter per bar. The ultrafiltration may achieve a protein sieving coefficient of about 0.05, of about 0.03, or about 0.01. The ultrafiltration membrane may a negative charge of about 10 milliequivalents per square meter, more than 25 milliequivalents per square meter, more than 50 milliequivalents per square meter, or more than 100 milliequivalents per square meter, including ranges of 10-25 milliequivalents per square meter, 10-50 milliequivalents per square meter, 10-100 milliequivalents per square meter, 10-200 milliequivalents per square meter, 10-500 milliequivalents per square meter, 25-50 milliequivalents per square meter, 25-100 milliequivalents per square meter, 25-200 milliequivalents per square meter, 50-100 milliequivalents per square meter, 50-200 milliequivalents per square meter, 50-500 milliequivalents per square meter 100-500, or milliequivalents per square meter.

The negatively charged ultrafiltration membrane may in particular have a molecular weight cutoff of 100-1000 kDa, and wherein said ultrafiltration membrane has a negative charge of 3-100 milliequivalents per square meter; or a molecular weight cutoff of 300-1000 kDa, and wherein said ultrafiltration membrane has a negative charge of 10-100 milliequivalents per square meter; or a molecular weight cutoff of 100 to 300 kDa, a negative charge of 5 to 30 milliequivalents per square meter, a hydraulic permeability of 120 to 250 Liters per hour per square meter, and a protein sieving coefficient of 0.00 to 0.05; or, where the protein mixture is whey or milk serum at its natural pH and conductivity, and the membrane has a molecular weight cutoff of 100 to 300 kDa, a negative charge of 5 to 30 milliequivalents per square meter, a hydraulic permeability of 120 to 250 Liters per hour per square meter, and a protein sieving coefficient of 0.00 to 0.05.

In some embodiments the methods of the invention involve implementing separation of proteins in a batch process. The term "batch" is used according to its ordinary and plain meaning in this field to refer to a process in which components of the purification process are incubated together, generally without regard to order or direction.

It is contemplated that any method or composition described herein can be implemented with respect to any other method or composition described herein. Moreover, it is clearly contemplated that embodiments may be combined with one another, to the extent they are compatible.

The use of the term "or" in the claims is used to mean "and/or" unless explicitly indicated to refer to alternatives only or the alternatives are mutually exclusive, although the disclosure supports a definition that refers to only alternatives and "and/or."

Throughout this application, the term "about" is used to indicate that a value includes the standard deviation of error for the device or method being employed to determine the value, or in the absence of such + 5% of the given value.

It is specifically contemplated that any embodiments described in the Examples section are included as an embodiment of the invention.

Following the long-standing patent law convention, the words "a" and "an," when used in conjunction with the word "comprising" in the claims or specification, denotes one or more, unless specifically noted.

Other objects, features and advantages of the present invention will become apparent from the following detailed description.

### BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.
**FIG. 1** **-** Sieving coefficient and flux using milk serum permeate at pH 6.8 and 22 °C.
**FIG. 2** **-** Sieving coefficients using Swiss cheese whey at pH 6.8 and 22 °C.
**FIG. 3** **-** Two-stage process for 80% whey protein concentrate (WPC 80) manufacture using an uncharged 10 kDa membrane versus a negatively charged 300 kDa membrane.
**FIG. 4** - Total permeate solids and non-protein permeate solids measured from the mingled permeate and diafiltrate streams.

### DESCRIPTION OF ILLUSTRATIVE EMBODIMENTS

Charged ultrafiltration membranes are ultrafiltration membranes modified to contain a charge that is covalently and irreversibly attached to the membrane backbone. The charge is covalently attached to the membrane and does not leach off during use or extensive chemical cleaning. The membrane charge combines with the membrane molecular weight cutoff (MWCO) to determine whether or not the membrane retains the proteins during protein concentration. These membranes are a new technology that has not been evaluated for milk protein concentration.

The present inventors have discovered that negatively-charged ultrafiltration membranes, particularly highly negatively-charged membranes, can provide improved concentration of dairy proteins. These membranes are fabricated from commercial ultrafiltration membranes. The inventors made the surprising discovery that by increasing the negative charge on ultrafiltration membranes having larger molecular weight cutoffs one can obtain the sieving coefficient of smaller membranes but at a higher hydraulic permeability, something previously not possible. These and other aspects of the disclosure are provided in detail below.

### I. Proteinaceous Compositions

In certain embodiments, the present invention concerns protein compositions comprising at least one proteinaceous molecule, such as a whey protein. As used herein, a "proteinaceous molecule," "proteinaceous composition," "proteinaceous compound," "proteinaceous chain" or "proteinaceous material" generally refers, but is not limited to, a protein of greater than about 50 amino acids or the full length endogenous sequence translated from a gene; a polypeptide of greater than about 100 amino acids; and/or a peptide of from about 3 to about 100 amino acids. All the "proteinaceous" terms described above may be used interchangeably herein.

### A. Milk Proteins

There are several types of proteins in milk. The major milk proteins are unique to milk - not found in any other tissue. Milk proteins, particularly caseins, have an appropriate amino acid composition for growth and development of the young. Other proteins in milk include an array of enzymes, proteins involved in transporting nutrients, proteins involved in disease resistance (antibodies and others), growth factors, *etc.*

The total protein component of milk is composed of numerous specific proteins. The primary group of milk proteins are the caseins. There are 3 or 4 caseins in the milk of most species; the different caseins are distinct molecules but are similar in structure. All other proteins found in milk are grouped together under the name of whey proteins. The major whey proteins in cow milk are beta-lactoglobulin (BLG) and alpha-lactalbumin (ALA).

The major milk proteins, including the caseins, beta-lactoglobulin and alpha-lactalbumin, are synthesized in the mammary epithelial cells and are only produced by the mammary gland. The immunoglobulin and serum albumin in milk are not synthesized by the epithelial cells. Instead, they are absorbed from the blood (both serum albumin and the immunoglobulins). An exception to this is that a limited amount of immunoglobulin is synthesized by lymphocytes which reside in the mammary tissue (called plasma cells). These latter cells provide the mammary gland with local immunity. Milk proteins can be identified by molecular mass. The relative size of the caseins (∼25-35 kDa) is distinguished from the major whey proteins beta-lactoglobulin (18.4 kDa) and alpha-lactalbumin (14.2 kDa). Others include primarily lactoferrin (∼80 kDa) and serum albumin (∼66 kDa).

### B. Caseins

Caseins have an appropriate amino acid composition that is important for growth and development of the nursing young. This high quality protein in cow milk is one of the key reasons why milk is such an important human food. Caseins are highly digestible in the intestine and are a high quality source of amino acids. Most whey proteins are relatively less digestible in the intestine, although all of them are digested to some degree. When substantial whey protein is not digested fully in the intestine, some of the intact protein may stimulate a localized intestinal or a systemic immune response. This is sometimes referred to as milk protein allergy and is most often thought to be caused by beta-lactoglobulin. Milk protein allergy is only one type of food protein allergy.

Caseins are composed of several similar proteins which form a multi-molecular, granular structure called a casein micelle. In addition to casein molecules, the casein micelle contains water and salts (mainly calcium and phosphorous). Some enzymes are associated with casein micelles as well. The micellar structure of casein in milk is an important part of the mode of digestion of milk in the stomach and intestine, the basis for many of the milk products industries (such as the cheese industry), and the basis for the ability to easily separate some proteins and other components from cow milk. Casein is one of the most abundant organic components of milk, in addition to the lactose and milk fat. Individual molecules of casein alone are not very soluble in the aqueous environment of milk. However, the casein micelle granules are maintained as a colloidal suspension in milk. If the micellar structure is disturbed, the micelles may come apart and the casein may come out of solution, forming the gelatinous material of the curd. This is part of the basis for formation of all non-fluid milk products like cheese.

### C. Whey Proteins

Whey proteins comprise one of the two major protein groups of bovine milk and account for approximately 20% of the milk composition. However, the present invention is not limited to whey protein from bovine milk and can be implemented with respect to the milk from other species. Whey protein is derived as a natural byproduct of the cheese-making process. In addition to proteins, the raw form contains fat, lactose and other substances. The raw form is processed to produce protein-rich whey protein concentrates (WPC) and whey protein isolates (WPI), among other things. Thus, whey proteins are comprised of high-biological-value proteins and proteins that have different functions. The primary whey proteins are beta-lactoglobulin and alpha-lactalbumin, two small globular proteins that account for about 70 to 80% of total whey protein. Proteins present in lesser amounts include the immunoglobulins IgG, IgA and IgM, but especially IgG, glycomacropeptides, bovine serum albumin, lactoferrin, lactoperoxidase and lysozyme.

There are many whey proteins in milk and the specific set of whey proteins found in mammary secretions varies with the species, the stage of lactation, the presence of an intramammary infection, and other factors. The major whey proteins in cow milk are beta-lactoglobulin and alpha-lactalbumin. Alpha-lactalbumin is an important protein in the synthesis of lactose and its presence is central to the process of milk synthesis. Beta-lactoglobulin's function is not known. Other whey proteins are the immunoglobulins (antibodies; especially high in colostrum) and serum albumin (a serum protein). Whey proteins also include a long list of enzymes, hormones, growth factors, nutrient transporters, disease resistance factors, and others.

### D. Milk Serum Proteins

Microfiltration of milk removes the casein micelles in the retentate and leaves the non-casein proteins of milk in the permeate. When the caseins are removed from milk without making cheese, the remaining proteins are comprised of the proteins found in whey with the exception of glycomacropeptide. The action of rennet or chymosin on kappa-casein cleaves off the hydrophilic glycomacropeptide, leaving the hydrophobic para-kapa-casein to coagulate and form cheese curd. When this enzymatic cleavage does not occur, glycomacropeptide generation also does not occur. Thus, the proteins in the milk microfiltration permeate are called milk serum proteins instead of whey proteins to highlight the distinction in composition, namely the absence of glycomacropeptide in milk serum proteins.

### II. Ultrafiltration

Ultrafiltration (UF) is a variety of membrane filtration in which hydrostatic pressure forces a liquid against a semipermeable membrane. Suspended solids and solutes of high molecular weight are retained, while water and low molecular weight solutes pass through the membrane. This separation process is used in industry and research for purifying and concentrating macromolecular (10³-10⁶ Daltons) solutions, especially protein solutions. Ultrafiltration is not fundamentally different from microfiltration or nanofiltration, except in terms of the size of the molecules it retains. Ultrafiltration is applied in cross-flow or dead-end mode and separation in ultrafiltration undergoes concentration polarization.

Specific molecular weight cut off values for use according to the present disclosure include 100 kDa or greater, 300 kDa or greater, 500 kDa or greater, and 1000 kDa. Ranges include 100-1000 kDa, 100-300 kDa, 100-500 kDa, 300-1000 kDa, 500-1000 kDa, and 300-500 kDa.

Ultrafiltration systems eliminate the need for clarifiers and multimedia filters for waste streams to meet critical discharge criteria or to be further processed by wastewater recovery systems for water recovery. Efficient ultrafiltration systems utilize membranes which can be submerged, back-flushable, air scoured, spiral wound UF/MF membrane that offers superior performance for the clarification of wastewater and process water. There are a number of different formats of ultrafiltration membrane geometries:
**Spiral wound module:** consists of large consecutive layers of membrane and support material rolled up around a tube; maximizes surface area; less expensive, however, more sensitive to flux decline caused by accumulation of solutes on the membrane.
**Tubular membrane:** Feed solution flows through the membrane lumen and the permeate is collected in the tubular housing; generally used for viscous or crude fluids; system is not very compact and has a high cost per m² installed.
**Hollow fiber membrane:** Modules contain several small (0.6 to 2 mm diameter) tubes or fibers; feed solution flows through the lumens of the fibers and the permeate is collected in the cartridge area surrounding the fibers; filtration can be carried out either "inside-out" or "outside-in."
Module configurations include:
**Pressurized system or pressure-vessel configuration:** TMP (transmembrane pressure) is generated in the feed stream by a pump, while the permeate stays at lower pressure closer to atmospheric pressure. Pressure-vessels are generally standardized, allowing the design of membrane systems to proceed independently of the characteristics of specific membrane elements.
**Immersed system:** Membranes are suspended in basins containing the feed and open to the atmosphere. Pressure on the influent side is limited to the pressure provided by the feed column. TMP is generated by a pump that develops suction on the permeate side. Ultrafiltration, like other filtration methods can be run as a continuous or batch process.

### III. Preparing Charged UF Membranes

Negatively charged membranes can be obtained by sulfonation of polysulfone, and a positively charged polymer can be synthesized by chloromethylation of polysulfone and then by quaternization of the amino group. U.S. Patent Publication 2003/0178368 A1 teaches how to make a charged cellulosic filtration membrane by covalently modifying the membrane's surfaces with a charged compound or a compound capable of being chemically modified to possess a charge. For example, a cellulosic (cellulose, cellulose di- or tri-acetate, cellulose nitrate or blends thereof) membrane has hydroxyl moieties that are derivitized to form the charged surfaces. A wide variety of compounds can be used. Most possess a halide moiety capable of reacting with the membrane surface (including the interior of its pores) as well as a hydroxyl moiety capable of reacting with a second ligand that imparts the charge, positive or negative. U.S. Patent 4,824,568 teaches casting a polymeric coating onto a membrane's surface and then cross-linking it in place with UV light, electron beam or another energy source to input a charge to the membrane such as PVDF, polyethersulfone, polysulfone, PTFE resin and the like. Examples of charged membranes are also found in U.S. Patent 4,849,106 and U.S. Patent Publication 2002/0185440.

The present invention envisions the use of highly negatively charged membranes, generally defined as those membranes exhibiting a charge of greater than 3 milliequivalents per square meter. The values for these membranes may be greater than 4, 5, 6, 7, 8, 9, 10, 11, 12, 13, 14, 15, 16, 17, 18, 19, 20, 25, 30, 35, 40, 45, 50, 60, 70, 75, 80, 90 or 100 milliequivalents per square meter. Ranges include any two of the aforementioned integers, including 3-100, 5-100, 10-100, 25-100, 50-100, 75-100, 3-75, 3-50, 3-25, 3-10, 10-100, 10-75, 10-50, 10-25, 25-100, 25-75 and 25-50 milliequivalents.

By using these negatively charged membranes in conjuction with the molecular weight cutoffs (MWCO) listed above, one should achieve relatively high hydraulic permeability with relatively low sieving coefficients. Indeed, the methods should produce a hydraulic permeability of more than 120 Liters per hour per square meter per bar and a protein sieving coefficient of no more than about 0.05, including 0.04, 0.03, 0.02 or 0.01. Hydraulic permeability of up to 500 Liters per hour per square meter per bar are envisioned while maintaining sieving coefficients of about 0.05 or less, including 120, 200, 280, 360, 440 Liters per hour per square meter per bar.

### IV. Adjusting Mixture pH and Conductivity

### A. Adjusting pH

Adjusting the pH of the protein mixture feed stream to the charged ultrafiltration membrane is expensive and undesired for concentration of proteins. It is desired to work at the natural pH and conductivity of the dairy process stream be it milk serum permeate or cheese whey. Charged ultrafiltration is different than traditional ultrafiltration in that the charge of the protein relative to the charge of the membrane is a key factor in addition to the size of the protein relative to the pore size of the membrane. Generally, when the pH of the solution is greater than the isoelectric point (pI) of a protein, then the protein has a net negative charge. In order for a negatively charged ultrafiltration membrane to reject a protein of interest it is desired to have the protein of interest have a net negative charge.

For example, milk serum proteins can be made by microfiltration of milk to remove the caseins. The milk serum protein contains predominately the proteins alpha-lactalbumin and beta-lactoglobulin. Alpha-lactalbumin is smaller (14.4 kDa) than beta-lactoglubulin (18.4 kDa) and is more acidic (pI 4.4) than beta-lactoglobulin (pI 5.1). Because milk serum is naturally at pH 6.0-7.0, adjusting the pH of milk serum is not necessary; both the alpha-lactalbumin and beta-lactoglobulin have a net negative charge. Both proteins will be subject to electrostatic repulsion by a negatively charged ultrafiltration membrane and retained by said membrane at a larger MWCO than would be possible using an uncharged ultrafiltration membrane.

In another example, cheese whey contains predominately glycomacropeptide, alpha-lactalbumin, and beta-lactoglobulin. Glycomacropeptide is smaller (8.6 kDa) and more acidic (pI < 3.8) than the other whey proteins. At the natural pH of cheese whey of pH 5.5-7, glycomacropeptide, alpha-lactalbumin and beta-lactoglobulin have a net charge that is negative, and subject to electrostatic repulsion by a negatively charged ultrafiltration membrane. Thus, whey at its natural pH is sufficient to practice the present invention.

### B. Adjusting Conductivity

Increasing the conductivity of the protein mixture increases shielding of the charges on the proteins. As conductivity increases from about 2-3 mS/cm to above about 50-100 mS/cm, charge shielding gradually increases to such an extent that eventually it completely negates the effect of electrostatic repulsion. This is undesirable because it takes away the advantages of charged ultrafiltration membranes compared to traditional ultrafiltration membranes. Milk and whey have a natural conductivity of about 3 to 10 mS/cm which is significant. Lowering the conductivity by diafiltration or electrodialysis is expensive.

Dissolving the dry dairy proteins in a dilute buffer solution is a commonly used method to adjust the pH and operate at low conductivity. This is undesirable however, because buffer salts are expensive and a hazard to the environment. Furthermore, drying the dairy proteins is expensive, and adding water and buffer to the dry proteins prior to concentration by charged ultrafiltration is an unnecessary and imprudent extra step. It is desired to concentrate dairy proteins from the milk or whey or milk serum protein stream without the addition of buffer salts or the adjustment of the milk or whey to a conductivity substantially lower than the natural value.

The inventors have found that there is a balance between membrane ionic capacity and protein-mixture conductivity. Increasing the membrane ionic capacity to more than about 3 milliequivalents per square meter generally increases the negative charge on the membrane. That increase in negative charge counteracts the charge shielding effect of elevated protein-mixture conductivity. Therefore, to operate at the high conductivity natural to milk and whey, the inventors have found that the amount of negative charge on the membrane must be increased to a high level, more than about 3 milliequivalents per square meter to ameliorate charge shielding.

### V. Examples

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice.

### EXAMPLE 1

Two negatively-charged ligands were evaluated: 3-bromopropane sulfonic acid and 2-aminoethane sulfonic acid (taurine). Millipore membranes of molecular weight cut-off 10 to 1000 kDa, which are available commercially, were modified to add a negative charge. For the 3-bromopropane sulfonic acid (Bromo-S), the bromine moiety reacts directly with the hydroxyl moieties on the cellulose to form a permanent covalent bond that will not leach off. For the taurine, the regenerated cellulose membranes from Millipore were reacted with allyl glycidyl ether and N-bromosuccinimide to place the bromine moiety directly on the cellulose. The taurine was attached to the membrane via its free primary amine at two ligand densities (Low Caustic and High Caustic).

Bromo-S: The regenerated cellulose (Ultracel PLC®) ultrafiltration membranes were modified using 3-bromopropane sodium sulfonate using the procedure of U.S. Patent 7,001,550 B2 and Bhushan and Etzel (2009). Membranes were recirculated with 0.1 M NaOH for 2 h, followed by recirculation with a 0.5 M solution of 3-bromopropane sodium sulfonate in 0.1 M NaOH for 21 h at 22 °C. The reaction was stopped by recirculating water at 22 °C followed by 1% acetic acid for 1 h at 22 °C. The membranes were stored in 0.1 M NaOH.

Low Caustic (LC) Taurine: The modification was carried out in a three-step process described by Riordan *et al.* (2009) at 22 °C with modifications. The Ultracel PLC® membranes were recirculated with a solution that was 0.1 M NaOH in 30% v/v DMSO for 2 h. After this, the hydroxyl groups on the cellulose matrix were activated by recirculating 5% v/v allyl glycidyl ether (AGE) in a solvent that contained 0.1 M NaOH in 30% DMSO for 24 h. The membrane was then washed with deionized water and reacted with 10 g/L N-bromosuccinimide in 30% v/v DMSO for 2 h. The membranes were then washed and recirculated with 0.5 M solution of taurine (aq.) at pH 10.5-11.0 for 48 h. After the reaction, the membranes were rinsed with deionized water and 1% acetic acid.

High Caustic (HC) Taurine: The Ultracel PLC® membranes were recirculated with a solution that was 0.3 M NaOH (3X more NaOH than the LC taurine) in 30 % v/v DMSO for 2 h. After this, the hydroxyl groups on the cellulose matrix were activated by recirculating 7.5% v/v AGE (1.5X more AGE than the LC taurine) in a solvent that contained 0.3 M NaOH (3X more NaOH than the LC taurine) in 30% DMSO for 48 h (2X more time than the LC taurine). The AGE solution was changed every 24 h after washing the membrane with deionized water. The membrane was then washed with deionized water and reacted with 10 g/L N-bromosuccinimide in 30% v/v DMSO for 2 h. The membranes were then washed and recirculated with 0.5 M solution of taurine (aq.) at pH 10.5-11.0 for 48 h. After the reaction, the membranes were rinsed with deionized water and 1 % acetic acid.

Analysis of the streams from the ultrafiltration of milk serum permeate was by SDS-PAGE and fluorescence laser densitometry. SDS-PAGE was using a 4% stacking gel and 15% resolving gel (Cat No. 3450020, Bio-Rad, Hercules, CA). Electrophoresis was at 200 V for 60 min. The gel was stained using 1X SYPRO Red (Lonza, Rockland, ME) in 7.5% acetic acid solution. After the staining, the gels were washed with 7.5% acetic acid for 5 min. Each gel contained five samples, three internal standards and a marker band. The gels were scanned on a TYPHOON-FLA 9000 laser densitometer (GE Healthcare, Piscataway, NJ) in fluorescence mode. Excitation wavelength was 532 nm and emission was at 635 nm. Bands were quantified on ImageQuantTL (GE healthcare). The internal standards consisted of 3 solutions, each containing known concentrations of alpha-lactalbumin (ALA) and beta-lactoglobulin (BLG) between 0.1-0.3 g/L each so that the total protein concentration applied to each lane was 0.4 g/L. A calibration curve was constructed based on the areas of the peaks given by ALA and BLG in these internal standards, from which the unknown concentrations were measured. Analysis of the streams from Swiss cheese whey followed the procedure of Bhushan and Etzel (2009) using HPLC to determine glycomacropeptide (GMP) by size exclusion chromatography and "other whey proteins" using cation exchange chromatography except 1 M NaCl was used for elution rather than 10 mM NaOH.

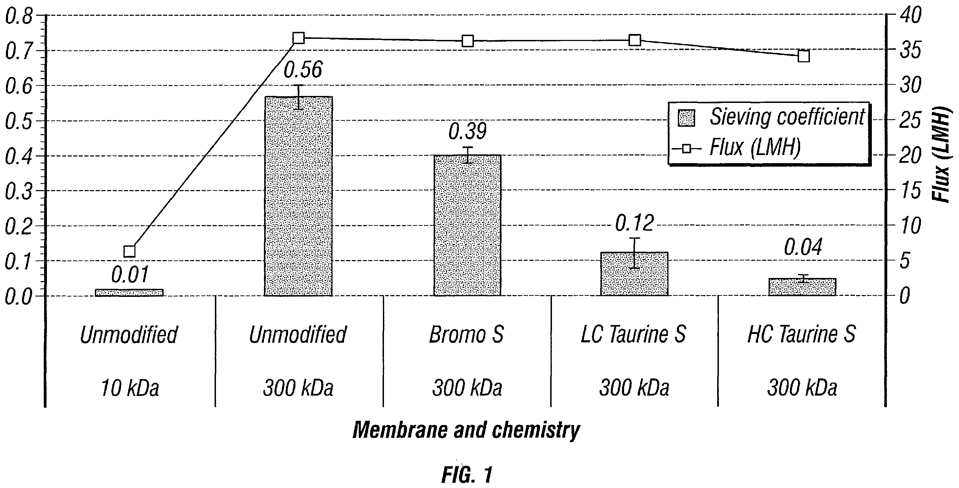

Protein rejection for milk serum permeate was measured using a 300 kDa tangential-flow ultrafiltration membrane (Pellicon XL, Ultracel, EMD Millipore, Bedford, MA) containing either one of the two negatively charged ligands, or no ligand at all for the uncharged, unmodified membrane (FIG. 1). An unmodified, uncharged 10 kDa membrane was also tested for comparison purposes. The goal was to achieve about the same sieving coefficient (Sₒ) as the 10 kDa membrane, but at a higher milk serum permeate flux (Jᵥ) and higher hydraulic permeability (Lₚ) than the 10 kDa membrane where Sₒ = 0.01 for total protein (sum of alpha-lactalbumin and beta-lactoglobulin), Jᵥ = 6 Liters per square meter per hour (LMH) at a pressure drop of 2 bar, and Lₚ = 50 LMH/bar.

The sieving coefficient Sₒ = Cₚ/C_{b}, where Cₚ is the protein concentration in the permeate (g/L) and C_{b} is the protein concentration in the bulk solution of the retentate (g/L). Protein rejection by the membrane = 1 - Sₒ. There are two measures used to characterize the permeability of the membrane. The first measure is the permeability to pure water called the hydraulic permeability (Lₚ). Lₚ was determined by measuring the flux of deionized water (LMH) at 22 °C versus pressure drop (bar), and taking the slope. The second measure is the permeability using the protein mixture such as whey or milk serum, and is called the permeate flux (Jᵥ).

Lₚ is generally greater than Jᵥ because, when using a protein mixture, a boundary layer of rejected protein builds up on the surface of the membrane and restricts flow. Lₚ is more a characteristic of the membrane itself, whereas Jᵥ depends also on the solution characteristics such as the protein concentration, protein diffusion coefficient, boundary layer thickness, fluid shear rate, and flow path length. In a protein concentration process, Jᵥ determines throughput.

All modified membranes exceeded the flux target for Jᵥ by 6X, but the negative charge provided by the 3-bromopropane sulfonic acid ligand was insufficient to reject enough protein (61% rejection, Sₒ = 0.39), although it was nevertheless better than the uncharged 300 kDa membrane where rejection of protein was 44% (Sₒ = 0.56). The low caustic (LC) taurine chemistry was better than the 3-bromopropane sulfonic acid chemistry because it deposited more charge, and rejected more protein (88%, Sₒ = 0.12), but the high caustic (HC) taurine chemistry was required to reject 96% of the protein (Sₒ = 0.04) in the milk serum permeate. The inventor considered the difference between the 99% rejection found using the uncharged 10 kDa membrane and the 96% rejection found using the negatively-charged 300 kDa HC taurine membrane acceptable given that Lₚ was 3.6X greater, and Jᵥ was 6X greater for the 300 kDa HC taurine membrane compared to the uncharged 10 kDa membrane.

The amount of negative charge on the membrane was determined by measuring the amount of protons that bind to the negatively charged membrane after treating it with an excess of strong acid (0.1 M HCl). The hydrogen ions were desorbed using 1 M KNO₃ and the eluate titrated using 0.02 M NaOH. The ionic capacity (I_{c}) of the membrane was calculated according to the formula: ionic capacity (mmol H⁺ per m² membrane area = C_{NaOH}xV_{OH}/Aₘ, where C_{NaOH} = concentration of NaOH (M), V_{OH} = volume of NaOH at the equivalence point (mL), and Aₘ = membrane area (m²). One mmol H+ equals one milliequivalent. Just 1M KNO₃ required small volumes (0.15 to 0.2 mL) of 0.02 M NaOH for titration to the equivalence point, corresponding to I_{c} = 0.60 to 0.80 mmol/m². The low values of I_{c} for the uncharged 10 kDa membrane are significantly impacted by this effect.

There was a tradeoff between Lₚ and Sₒ with increasing I_{c} for the 300 kDa membranes (Table 1). As I_{c} increased, both Sₒ and Lₚ decreased. The net result was that benefiting from a higher recovery (smaller Sₒ), required suffering from a lower Lₚ as I_{c} increased. The proper balance between gaining recovery at the expense of losses in Lₚ will depend on the application. Nevertheless, in all cases, the negatively charged 300 kDa membrane was a 3-4 fold improvement over the Lₚ of the uncharged 10 kDa membrane (Lₚ = 50 LMH/bar) used presently to concentrate dairy proteins.

| **Table 1 - Characteristics of the unmodified and modified membranes** | | | | | |
|---|---|---|---|---|---|
| Membrane | Unmodified 10 kDa | Unmodified 300 kDa | Bromo S 300 kDa | LC Taurine S 300 kDa | HC Taurine S 300 kDa |
| Ionic Capacity (mmol/m²) | 1.5 | 1.1 | 3.3 | 4.7 | 15.7 |
| Hydraulic Permeability (LMH/bar) | 50 | 250 | 200 | 190 | 180 |
| Sieving Coefficient | 0.01 | 0.56 | 0.39 | 0.12 | 0.04 |

The inventors were successful in showing that milk serum permeate can be concentrated at a six-fold higher flux (6X Jᵥ) using negatively-charged 300 kDa ultrafiltration membrane compared to the industry standard uncharged 10 kDa membrane. Protein retention was 96% using the negatively charged 300 kDa ultrafiltration membrane compared to 99% using the industry standard uncharged 10 kDa membrane. These results mean that area can be reduced by six-fold to process the same volume of milk serum permeate per day or that the volume of milk serum permeate made per day can be increased by six-fold using the same membrane area when compared to the standard of practice in the dairy industry today. To attain 99% recovery (Sₒ = 0.01) might require a negatively charged ultrafiltration membrane of lower molecular weight cutoff, e.g., 100 kDa, , but this membrane would still have several-fold higher flux than an uncharged 10 kDa membrane used presently by industry.

### EXAMPLE 2

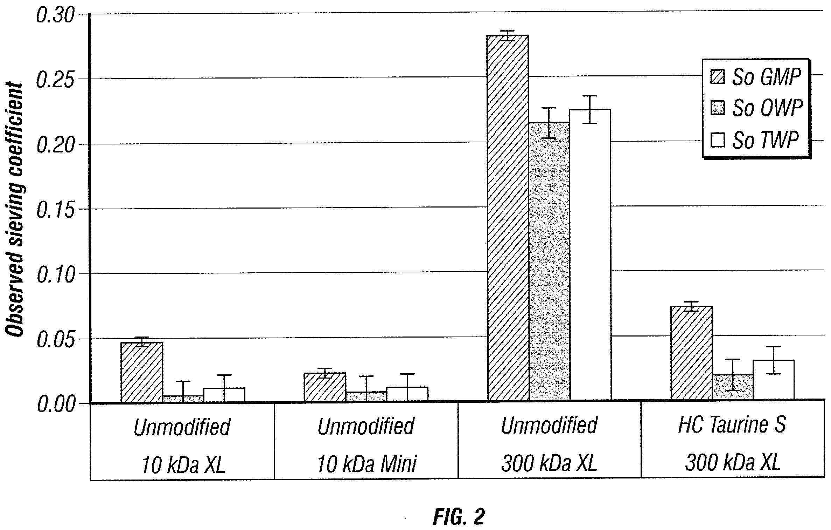

Using Swiss cheese whey, the sieving coefficients (Sₒ) for glycomacropeptide (GMP) and the other whey proteins (OWP) were measured using 10 kDa or 300 kDa membranes containing either the negatively charged taurine ligand or no ligand at all (FIG. 2). The goal was to achieve about the same sieving coefficients as the 10 kDa membrane, but using the 300 kDa membrane that have a much higher whey permeate flux (Jᵥ) and hydraulic permeability (Lₚ) than the 10 kDa membrane. It was also desired to compare performance on scale up using the 10 kDa membrane in the 50 cm² XL and 1000 cm² mini tangential-flow membrane systems. As shown, Sₒ for GMP was 0.047 for the 10 kDa XL and 0.022 for the 10 kDa mini. Sₒ for "other whey proteins" (OWP) was 0.005 for the 10 kDa XL and 0.008 for the 10 kDa mini. Sₒ for total whey protein (TWP) was 0.010 for the 10 kDa XL and 0.011 for the 10 kDa mini. Thus, there was not a significant difference in performance of the 50 cm² XL versus 1000 cm² mini systems, and scale up was straightforward and successful.

The uncharged 300 kDa membrane had much higher sieving coefficients than the uncharged 10 kDa membrane: Sₒ GMP = 0.28, Sₒ OWP = 0.21, and Sₒ TWP = 0.22. Although 22% of the TWP passed through the uncharged 300 kDa membrane compared to only 1% for the uncharged 10 kDa membrane, the hydraulic permeability of the uncharged 300 kDa membrane was 5-fold greater (Lₚ = 250 vs. 50 LMH/bar).

Adding a negative charge to the 300 kDa membrane dramatically decreased Sₒ without a substantial decrease in Lₚ. The 300 kDa HC taurine membrane (same membrane as in Table 1) had: Sₒ GMP = 0.07, Sₒ OWP = 0.02, Sₒ TWP = 0.03. In conclusion, 3% of the total whey protein passed through the 300 kDa taurine membrane compared to 1 % for the uncharged 10 kDa membrane, but the hydraulic permeability of the 300 kDa HC taurine membrane was 3.6-fold greater (Lp = 180 vs. 50 LMH/bar) and the whey permeate flux 7.5X greater (Jᵥ = 36 LMH vs. 4.8 LMH at 2 bar pressure drop).

The inventors were successful in showing that Swiss cheese whey can be concentrated using a negatively charged 300 kDa ultrafiltration membrane at about the same protein retention as the industry standard uncharged 10 kDa membrane, but at a higher hydraulic permeability and higher whey permeate flux. Protein retention was 97% using the negatively charged 300 kDa HC taurine ultrafiltration membrane compared to 99% using the uncharged 10 kDa membrane. This means that membrane area can be reduced substantially to process the same volume of whey per day or that the volume of whey processed per day can be increased using the same membrane area when compared to the standard of practice in the dairy industry today.

### EXAMPLE 3

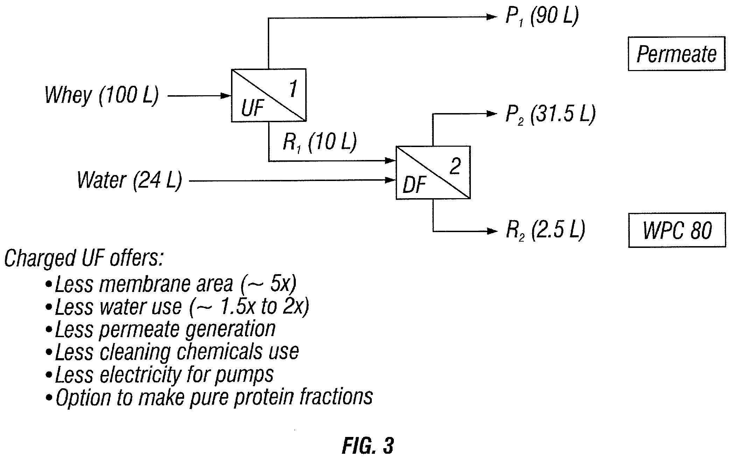

A process was set-up that mimics the production of 80% whey protein concentrate (WPC 80) in industry. It uses a 10X volume concentration factor (VCF) in stage one, followed by a 4X VCF with diafiltration in stage two (FIG. 3). The inventors tested this process using the 1000 cm² uncharged 10 kDa membrane and the 50 cm² 300 kDa negatively-charged HC taurine membrane (same membrane as in Table 1).

As shown in Table 2, using the 1000 cm² 10 kDa uncharged ultrafiltration membrane, it was observed that Sₒ GMP = 0.026 for stage one, and Sₒ GMP = 0.009 for stage two, and that Sₒ OWP = 0.012 for stage one and Sₒ OWP = 0.018 for stage two. For total protein, Sₒ TWP = 0.014 for stage one and Sₒ TWP = 0.011 for stage two. Permeate flux was 5.7 LMH/bar for stage one and 5.4 LMH/bar for stage two.

Using the 50 cm² 300 kDa negatively charged HC taurine ultrafiltration membrane, Sₒ GMP = 0.064 for stage one, Sₒ GMP = 0.05 and for stage two, and Sₒ OWP = 0.031 for stage one and Sₒ OWP = 0.030 for stage two. For total protein, Sₒ TWP = 0.034 for stage one and Sₒ TWP = 0.030 for stage two. Permeate flux was 28 LMH/bar for stage one and 23 LMH/bar for stage two.

| **Table 2 - WPC 80 manufacture using uncharged 10 kDa versus negatively charged 300 kDa membranes** | | | | | | | | | |
|---|---|---|---|---|---|---|---|---|---|
| | Sₒ GMP | | Sₒ OWP | | Sₒ TWP | | Jᵥ (LMH/bar) | | Lₚ (LMH/bar) |
| Membrane | Stage 1 | Stage 2 | Stage 1 | Stage 2 | Stage 1 | Stage 2 | Stage 1 | Stage 2 | |
| 10 kDa Uncharged | .026 | .009 | .012 | .018 | .014 | .011 | 5.7 | 5.4 | 74 |
| 300 kDa HC Taurine | .064 | .05 | .031 | .03 | .034 | .030 | 28 | 23 | 180 |

Therefore, the inventors observed 97% retention of total protein using the 50 cm² 300 kDa negatively-charged HC taurine ultrafiltration membrane compared to about 99% retention of total protein for the 1000 cm² uncharged 10 kDa membrane, but the whey permeate flux Jᵥ was 5X greater for the 300 kDa negatively-charged membrane versus the uncharged 10 kDa membrane.

### EXAMPLE 4

The inventors used the HC taurine chemistry of Example 2 to prepare negatively charged 100 kDa and 300 kDa Pellicon-2 mini membrane modules (EMD Millipore, Billerica, MA) of 1000 cm² membrane area and made of composite regenerated cellulose (Ultracel™ PLC). The differences in this example compared to Example 2 were: (1) all but one of the experiments in Example 2 used the smaller XL area (50 cm²), *i.e.,* only the 10 kDa uncharged membrane was a mini, (2) no 100 kDa membrane was examined in Example 2, and (3) no flux excursion was examined in Example 2. The objective in the present example was to scale-up the technology from 50 cm² to 1000 cm² (20X) and compare performance. The inventors sought to achieve about the same sieving coefficient (Sₒ) as the 10 kDa membrane, but at a higher whey flux (Jᵥ) and higher hydraulic permeability (Lₚ).

| **Table 3 - Sieving coefficients (Sₒ) for ultrafiltration of Swiss cheese whey using different membranes. All data were collected at pH 6.8 and 22 °C in duplicate (n =2) unless indicated otherwise** | | | | | |
|---|---|---|---|---|---|
| | **Lₚ (LMH/bar)** | **Jᵥ (LMH)** | ***Sₒ* OWP** | ***Sₒ* GMP** | ***Sₒ* TWP** |
| 10 kDa unmodified | 75 | 12 (n = 6) | 0.016 | 0.039 | 0.020 |
| 100 kDa unmodified | 240 | 12 (n = 3) | 0.39 | 0.70 | 0.44 |
| | | 24 (n = 5) | 0.34 | 0.75 | 0.41 |
| 100 kDa negatively charged | 130 | 12 | 0.023 | 0.024 | 0.025 |
| | | 24 (n = 8) | 0.016 | 0.017 | 0.017 |
| | | 36 | 0.024 | 0.056 | 0.030 |
| | | 48 | 0.021 | 0.063 | 0.029 |
| 300 kDa negatively charged | 170 | 12 | 0.062 | 0.115 | 0.069 |
| | | 24 | 0.057 | 0.096 | 0.069 |
| | | 36 | 0.040 | 0.084 | 0.048 |
| | | 48 (n = 6) | 0.040 | 0.080 | 0.046 |
| | | 60 | 0.023 | 0.113 | 0.036 |
| | | 72 | 0.025 | 0.117 | 0.038 |
| | | 90 | 0.030 | 0.119 | 0.040 |

As shown in Table 3, the sieving coefficient for total whey protein (Sₒ TWP) was not statistically significantly different (p > 0.05) between the 10 kDa unmodified membrane (Sₒ TWP = 0.020) and the 100 kDa negatively charged membrane (Sₒ TWP = 0.017) at a whey flux (Jᵥ = 24 LMH) and a hydraulic permeability (Lₚ = 130 LMH/bar) that were 2X and 1.7X higher, respectively, for the 100 kDa negatively charged membrane compared to the 10 kDa unmodified membrane (Jᵥ = 12 LMH, Lₚ = 75 LMH/bar). These results can be compared to the 100 kDa unmodified membrane where Sₒ TWP = 0.41 at Jᵥ = 24 LMH. This means that adding a negative charge to the 100 kDa membrane increased rejection of TWP from 59% to 98%. Therefore, addition of a negative charge to the 100 kDa membrane was required to obtain the same protein rejection as the 10 kDa unmodified membrane, but at a 2X higher whey flux.

It was possible to increase whey flux for the 100 kDa negatively charged membrane even further to Jᵥ = 48 LMH (4X higher than for the 10 kDa unmodified membrane) without a statistically significant (p > 0.05) increase in the sieving coefficient for other whey protein (Sₒ OWP = 0.021), but the sieving coefficient of TWP increased slightly (Sₒ TWP = 0.029). Nevertheless, the 100 kDa negatively charged membrane rejected 97% of the TWP compared to 98% for the 10 kDa unmodified membrane, but at 4X the whey flux.

For the 300 kDa negatively charged membrane, a whey flux enhancement of 7.5X was achieved at 96% rejection of TWP (Sₒ TWP = 0.04) compared to 98% rejection for the 10 kDa unmodified membrane (Sₒ TWP = 0.02).

In conclusion, the inventors found that the negatively charged 100 kDa and 300 kDa membranes achieved about the same protein rejection as the 10 kDa membrane, but at a higher whey flux (Jᵥ) and higher hydraulic permeability (Lₚ). For the 100 kDa negatively charged membrane, rejection of TWP was 98% and not statistically different than the 10 kDa unmodified membrane, yet whey flux was 2X higher and the hydraulic permeability was 1.7X higher. For the 300 kDa negatively charged membrane, rejection of TWP was 96%, yet whey flux was 7.5X higher, and hydraulic permeability was 2.3X higher. These results are significant because the inventors successfully scaled up the technology by 20X while retaining the benefits found at smaller scale.

### EXAMPLE 5

Following Example 3, the industrial process for producing WPC80 was simulated, but this time using all 20X larger-area membranes (1000 cm² mini), and including the 100 kDa unmodified and negatively charged membranes. Furthermore, measurements were made of protein recovery for each stage and overall, solids in the permeate, and the anti-fouling properties of the membranes. The feed stream consisted of 5 L of Swiss cheese whey at pH 6.8. This was separated into 4.5 L of P₁, 0.5 L of R₁, 1.575 L of P₂, and 0.125 L of R₂ (see FIG. 3). Diafiltration water added was 1.2 L. Recovery of OWP, GMP and TWP in retentate stream R₂ was measured compared to the feed stream (Table 4).

| **Table 4 - Protein recovery (%) for WPC80 process for: other whey proteins (OWP), glycomacropeptide (GMP), and total whey protein (TWP)** | | | | | | | | | | |
|---|---|---|---|---|---|---|---|---|---|---|
| | | Ultrafiltration (stage 1) | | | Diafiltration (stage 2) | | | Overall (stages 1+ 2) | | |
| Membrane | Jᵥ (LMH) | OWP | GMP | TWP | OWP | GMP | TWP | OWP | GMP | TWP |
| 10 kDa uncharged | 12 | 94 | 92 | 94 | 91 | 72 | 90 | 85 | 67 | 81 |
| 100 kDa uncharged | 24 | 58 | 28 | 53 | 59 | 7 | 54 | 31 | 4 | 27 |
| 300 kDa negatively charged | 48 | 87 | 79 | 85 | 82 | 80 | 81 | 70 | 59 | 68 |
| 100 kDa, negatively charged | 24 | 99 | 92 | 99 | 86 | 93 | 86 | 85 | 86 | 85 |

As shown in Table 4, overall recoveries of OWP and TWP were not different (p > 0.05) between the 10 kDa unmodified membrane (85% and 81%) and 100 kDa negatively charged membrane (85% and 85%), but whey flux was 2X higher for the 100 kDa negatively charged membrane. Overall recovery of GMP was higher for the 100 kDa negatively charged membrane (86%) than the 10 kDa unmodified membrane (67%) (p < 0.05). Addition of a negative charge was required to obtain high recovery at high flux; the 100 kDa unmodified membrane had 27% recovery of TWP, 31% recovery of OWP, and 4% recovery of GMP. These values are about 1/3^{rd} to 1/20^{th} the recoveries found using the 100 kDa negatively charged membrane. In conclusion, the 100 kDa negatively charged membrane had the same or higher recovery than the 10 kDa unmodified membrane, but at 2X higher whey flux.

For the 300 kDa negatively charged membrane, recoveries of OWP and TWP were somewhat lower (17%) than the 10 kDa unmodified membrane (p < 0.05), and recovery of GMP was not different (p > 0.05), but the whey flux was 4X higher (Table 4).

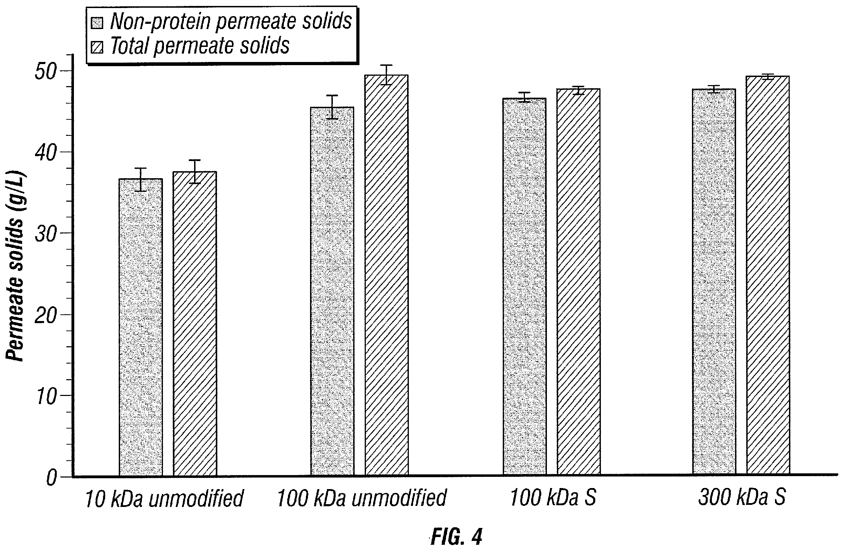

Permeate streams P₁ and P₂ were pooled for measurement of the dry solids (Total Permeate Solids in FIG. 4). Non-Protein Permeate Solids was calculated by subtracting the TWP from Table 4 from the Total Permeate Solids. Non-Protein Permeate Solids consists of lactose, ash, non-protein nitrogen, and other small molecules in whey that permeate the membrane. As shown in FIG. 4, the Non-Protein Permeate Solids were lowest for the 10 kDa unmodified membrane, and 27% and 29% higher for the 100 kDa and 300 kDa negatively charged membranes, respectively. This means that these Non-Protein Permeate Solids more freely passed through the 100 kDa and 300 kDa negatively charged membranes compared to the 10 kDa unmodified membrane. This is significant because it means less water is required for diafiltration using the 100 kDa and 300 kDa negatively charged membranes. Less water consumption means less wastewater generation to make the same product (WPC80). Lower water consumption and less wastewater generation is an additional benefit of the present invention.

Extent of membrane fouling was measured by means of the normalized water permeability (NWP). The ultrafiltration membrane was rinsed with 100 L/m² of deionized water after the ultrafiltration process for WPC80 manufacture and the hydraulic permeability (Lₚ) measured before cleaning the membrane. NWP is the ratio of Lₚ after to Lₚ before WPC80 manufacture, expressed as a percentage. Higher NWP means less fouling. It was found that even after the 40-fold concentration process for WPC80 manufacture, the NWP was 100% for the negatively charged membranes, but only 61% for the 10 kDa unmodified membrane (Table 5). This means that the negatively charged membranes were anti-fouling, that is they can be cleaned faster, using less cleaning chemicals, than the 10 kDa unmodified membrane. This lowers the cost of manufacture and wastewater generation when using the present invention for protein concentration.

| **Table 5. Normalized water permeability (NWP) after WPC80 manufacture.** | |
|---|---|
| Membrane | NWP (%) |
| 10 kDa uncharged | 61±4 |
| 100 kDa uncharged | 55±3 |
| 300 kDa negatively charged | 98±5^{a} |
| 100 kDa, negatively charged | 105±4^{a} |
| ^{a}Letter in column means not significantly different than 100 % (p < 0.05) | |

### EXAMPLE 6

The objectives of this example were: (1) to scale up the technology to a membrane area of 70,000 cm² (1400X the XL membrane and 70X the mini membrane of the previous examples), (2) to examine a spiral wound membrane compared to the flat sheet membranes used in the previous examples, and (3) to compare Kjedahl protein analyis to the HPLC protein analysis of the previous examples.

The inventors used the HC taurine chemistry of Example 2 to prepare a negatively charged 100 kDa spiral wound membrane module (regenerated cellulose, 3.8 inch diameter by 38 inches long spiral, 30 mil spacer thickness, Microdyn-Nadir GmbH, Wiesbaden, Germany). Three spiral wound membranes were compared side-by-side at the Wisconsin Center for Dairy Research Process Pilot Plant: (1) 10 kDa unmodified polyethersulfone membrane (2), 100 kDa unmodified regenerated cellulose membrane, and (3) 100 kDa negatively charged regenerated cellulose membrane (HC taurine chemistry). Spiral wound membranes were fitted into cylindrical holders and connected to a common feed tank via a manifold. Gouda cheese whey at pH 6.86 (900 L) was concentrated. Permeate flux was monitored simultaneously on all three membranes using rotameters and controlled to a target value using exit valves: 21 LMH for the 100 kDa membranes and 12 LMH for the 10 kDa membrane. Samples were collected at different time points in the process for analysis of protein content to determine sieving coefficients (retention): at the start of ultrafiltration, at the end of approximately a 10-fold concentration, and at the end of diafiltration.

| **Table 6 - Sieving coefficient (Sₒ) measured by HPLC and Kjeldahl methods during different stages of ultrafiltration** | | | | | | |
|---|---|---|---|---|---|---|
| | **10 kDa unmodified** | | **100 kDa unmodified** | | **100 kDa negatively charged** | |
| | **Sₒ (HPLC)** | **Sₒ (Kjeldahl)** | **Sₒ (HPLC)** | **Sₒ (Kjeldahl)** | **Sₒ (HPLC)** | **Sₒ (Kjeldahl)** |
| Start of ultrafiltration | 0.008 | 0.000 | 0.170 | 0.156 | 0.011 | 0.044 |
| End of concentration | 0.000 | 0.000 | 0.142 | 0.099 | 0.018 | 0.010 |
| End of diafiltration | 0.000 | 0.000 | 0.140 | 0.118 | 0.015 | 0.008 |
| Average | 0.003 | 0.000 | 0.151 | 0.124 | 0.015 | 0.021 |

Samples were analyzed for protein concentration by two different methods: HPLC as in the previous examples and Kjeldahl nitrogen (Eurofins DQCI, Mounds View, MN). Results are summarized in Table 6. Averages were not statistically significantly different between the HPLC and Kjeldahl methods (p > 0.05). In general, the two methods of protein concentration analysis gave very similar results. In addition, averages were not significantly different between the 10 kDa unmodified and 100 kDa negatively charged membranes using HPLC (p > 0.03) and Kjeldahl (p > 0.05).

The Kjeldahl method of protein analysis does not fully count GMP like the HPLC method does. Therefore, the full accounting of transmission of the proteins: OWP, GMP, and TWP for the three membranes using HPLC is shown in Table 7. The average value of Sₒ for GMP was not different between the 10 kDa uncharged and the 100 kDa negatively charged membranes (p > 0.05). The average value of Sₒ for OWP and TWP were different at p = 0.05, but not different at p = 0.01.

In conclusion, the spiral wound 100 kDa negatively charged membrane offered similar protein rejection compared to the unmodified 10 kDa membrane, but at 1.8X higher flux. Scale up of 1400X over the XL membrane and 70X over the mini membranes used in the previous examples was successful, as was transfer of the invention from a flat sheet membrane to spiral wound membrane format.

| **Table 7 - Sieving coefficients for other whey protein (OWP), glycomacropeptide (GMP) and total whey protein (TWP) for the three different membranes using HPLC** | | | | | | | | | |
|---|---|---|---|---|---|---|---|---|---|
| | **10 kDa Unmodified** | | | **100 kDa Unmodified** | | | **100 kDa Negatively Charged** | | |
| | **Sₒ OWP** | **Sₒ GMP** | **Sₒ TWP** | **Sₒ OWP** | **Sₒ GMP** | **Sₒ TWP** | **Sₒ OWP** | **Sₒ GMP** | **Sₒ TWP** |
| Start of ultrafiltration | 0.009 | 0.00 0 | 0.008 | 0.16 | 0.21 | 0.17 | 0.013 | 0.000 | 0.011 |
| End of concentration | 0.000 | 0.00 0 | 0.000 | 0.13 | 0.21 | 0.14 | 0.020 | 0.010 | 0.018 |
| End of Diafiltration | 0.000 | 0.00 0 | 0.000 | 0.11 | 0.25 | 0.14 | 0.017 | 0.007 | 0.015 |
| Average | 0.003 | 0.00 0 | 0.003 | 0.13 | 0.22 | 0.15 | 0.017 | 0.006 | 0.015 |

All of the compositions and methods disclosed and claimed herein can be made and executed without undue experimentation in light of the present disclosure.

### REFERENCES

U.S. Patent 4,824,568
U.S. Patent 4,849,106
U.S. Patent 7,001,550 B2
U.S. Patent Publn. 2002/0185440
U.S. Patent Publn. 2003/0178368 A1
S. Bhushan and M.R. Etzel, Charged ultrafiltration membranes increase the selectivity of whey protein separations, J. Food Sci., 74 (2009) E131
W. Riordan, S. Heilmann, K. Brorson, K. Seshadri, Y. He, M.R. Etzel, Design of salt-tolerant membrane adsorbers for viral clearance, Biotechnol. Bioeng., 103 (2009), 920

## Claims

1. A method of concentrating dairy proteins comprising:
(a) providing a protein mixture containing one or more dairy proteins;
(b) contacting said mixture with a negatively charged ultrafiltration membrane wherein said ultrafiltration membrane has a molecular weight cutoff of 100 kDa or greater and a negative charge of more than 3 milliequivalents per square meter,
wherein said method produces a hydraulic permeability of more than 120 Liters per hour per square meter per bar and a protein sieving coefficient of no more than 0.05.

2. The method of claim 1, wherein said protein mixture is a milk protein mixture, a whey or serum protein mixture.

3. The method of claim 2, wherein said milk protein mixture comprises a casein.

4. The method of claim 2, wherein said protein mixture is a whey protein mixture that comprises one or more of beta-lactoglobulin, alpha-lactalbumin, IgG, IgA, IgM, a glycomacropeptide, bovine serum albumin, lactoferrin, lactoperoxidase and/or lysozyme.

5. The method of claim 1, wherein said negatively charged ultrafiltration membrane has a molecular weight cutoff of about 300 kDa, 100-1000 kDa, 100-300 kDa, 300-1000 kDa or 500-1000kDa.

6. The method of claim 1, wherein said protein mixture comprises one or more of glycomacropeptide (GMP), alpha-lactalbumin (ALA), immunoglobulin G (IgG), and/or beta-lactoglobulin (BLG).

7. The method of claim 1, wherein said ultrafiltration achieves a hydraulic permeability of about 200 Liters per hour per square meter per bar, about 250 Liters per hour per square meter per bar, or about 300 Liters per hour per square meter per bar.

8. The method of claim 1, wherein said ultrafiltration achieves a protein sieving coefficient of about 0.05, about 0.03, or about 0.01.

9. The method of claim 1, wherein said ultrafiltration membrane has a negative charge of about 10 milliequivalents per square meter, of more than 25 milliequivalents per square meter, of more than 50 milliequivalents per square meter, or of more than 100 milliequivalents per square meter.

10. The method of claim 1, wherein: (i) said negatively charged ultrafiltration membrane has a molecular weight cutoff of 100-1000 kDa, and wherein said ultrafiltration membrane has a negative charge of 3-100 milliequivalents per square meter; or (ii) said negatively charged ultrafiltration membrane has a molecular weight cutoff of 300-1000 kDa, and wherein said ultrafiltration membrane has a negative charge of 10-100 milliequivalents per square meter.

11. The method of claim 1, further comprising adjusting the pH of the protein mixture prior to step (b) and/or further comprising adjusting the conductivity of the protein mixture prior to step (b).

12. The method of claim 1, wherein the membrane has a molecular weight cutoff of 100 to 300 kDa, a negative charge of 5 to 30 milliequivalents per square meter, a hydraulic permeability of 120 to 250 Liters per hour per square meter, and a protein sieving coefficient of 0.00 to 0.05.

13. The method of claim 12, wherein the protein mixture is whey or milk serum at its natural pH and conductivity.

## Patentansprüche

1. Verfahren zum Konzentrieren von Milchproteinen, das Folgendes umfasst:
(a) Bereitstellen eines Proteingemisches, das ein oder mehrere Milchproteine enthält;
(b) Inberührungbringen des Gemisches mit einer negativ geladenen Ultrafiltrationsmembran, wobei die Ultrafiltrationsmembran einen Molekulargewichtsausschluss von 100 kDa oder mehr und eine negative Ladung von mehr als 3 Milliäquivalente pro Quadratmeter hat,
wobei das Verfahren eine hydraulische Permeabilität von mehr als 120 Liter pro Stunde pro Quadratmeter pro Bar und einen Proteinsiebkoeffizienten von nicht mehr als 0,05 herstellt.

2. Verfahren nach Anspruch 1, wobei das Proteingemisch ein Milchproteingemisch, ein Molke- oder Serumproteingemisch ist.

3. Verfahren nach Anspruch 2, wobei das Milchproteingemisch ein Casein umfasst.

4. Verfahren nach Anspruch 2, wobei das Proteingemisch ein Molkeproteingemisch ist, das eines oder mehrere der Folgenden umfasst: β-Lactoglobulin, α-Lactalbumin, IgG, IgA, IgM, ein Glycomakropeptid, Rinderserumalbumin, Lactoferrin, Lactoperoxidase und/oder Lysozym.

5. Verfahren nach Anspruch 1, wobei die negativ geladene Ultrafiltrationsmembran einen Molekulargewichtsausschluss von etwa 300 kDa, 100-1000 kDa, 100-300 kDa, 300-1000 kDa oder 500-1000 kDa besitzt.

6. Verfahren nach Anspruch 1, wobei das Proteingemisch eines oder mehrere der Folgenden umfasst: Glycomakropeptid (GMP), α-Lactalbumin (ALA), Immunoglobulin G (IgG) und/oder β-Lactog|obu|in (BLG).

7. Verfahren nach Anspruch 1, wobei das Ultrafiltrieren eine hydraulische Permeabilität von etwa 200 Liter pro Stunde pro Quadratmeter pro Bar, etwa 250 Liter pro Stunde pro Quadratmeter pro Bar oder etwa 300 Liter pro Stunde pro Quadratmeter pro Bar erreicht.

8. Verfahren nach Anspruch 1, wobei das Ultrafiltrieren einen Proteinsiebkoeffizienten von etwa 0,05, etwa 0,03 oder etwa 0,01 erreicht.

9. Verfahren nach Anspruch 1, wobei die Ultrafiltrationsmembran eine negative Ladung von etwa 10 Milliäquivalenten pro Quadratmeter, von mehr als 25 Milliäquivalenten pro Quadratmeter, von mehr als 50 Milliäquivalenten pro Quadratmeter oder von mehr als 100 Milliäquivalenten pro Quadratmeter hat.

10. Verfahren nach Anspruch 1, wobei: (i) die negativ geladene Ultrafiltrationsmembran einen Molekulargewichtsausschluss von 100-1000 kDa hat, und wobei die Ultrafiltrationsmembran eine negative Ladung von 3-100 Milliäquivalenten pro Quadratmeter hat; oder (ii) die negativ geladene Ultrafiltrationsmembran einen Molekulargewichtsausschluss von 300-1000 kDa hat, und wobei die Ultrafiltrationsmembran eine negative Ladung von 10-100 Milliäquivalenten pro Quadratmeter hat.

11. Verfahren nach Anspruch 1, das ferner das Einstellen des pH-Wertes des Proteingemisches vor dem Schritt (b) umfasst und/oder ferner das Einstellen der Leitfähigkeit des Proteingemisches vor dem Schritt (b) umfasst.

12. Verfahren nach Anspruch 1, wobei die Membran einen Molekulargewichtsausschluss von 100 bis 300 kDa, eine negative Ladung von 5 bis 30 Milliäquivalenten pro Quadratmeter, eine hydraulische Permeabilität von 120 bis 250 Liter pro Stunde pro Quadratmeter und einen Proteinsiebkoeffizienten von 0,00 bis 0,05 hat.

13. Verfahren nach Anspruch 12, wobei das Proteingemisch Molke oder Milchserum mit dessen natürlichen pH-Wert und Leitungsfähigkeit ist.

## Revendications

1. Procédé de concentration de protéines laitières comprenant :
(a) la fourniture d'un mélange de protéines contenant une ou plusieurs protéines laitières ;
(b) la mise en contact dudit mélange avec une membrane d'ultrafiltration chargée négativement, laquelle membrane d'ultrafiltration a un seuil de coupure du poids moléculaire de 100 kDa ou plus et une charge négative de plus de 3 milliéquivalents par mètre carré,
ledit procédé produisant une perméabilité hydraulique de plus de 120 litres par heure par mètre carré par bar et un coefficient de criblage des protéines ne dépassant pas 0,05.

2. Procédé selon la revendication 1, dans lequel ledit mélange de protéines est un mélange de protéines de lait, un mélange de protéines de lactosérum ou un mélange de protéines de sérum.

3. Procédé selon la revendication 2, dans lequel ledit mélange de protéines de lait comprend une caséine.

4. Procédé selon la revendication 2, dans lequel ledit mélange de protéines est un mélange de protéines de lactosérum qui comprend un ou plusieurs parmi la bêta-lactoglobuline, l'alpha-lactalbumine, l'IgG, l'IgA, l'IgM, un glycomacropeptide, la sérumalbumine bovine, la lactoferrine, la lactoperoxydase et/ou le lysozyme.

5. Procédé selon la revendication 1, dans lequel ladite membrane d'ultrafiltration chargée négativement a un seuil de coupure du poids moléculaire d'environ 300 kDa, 100 à 1 000 kDa, 100 à 300 kDa, 300 à 1 000 kDa ou 500 à 1 000 kDa.

6. Procédé selon la revendication 1, dans lequel ledit mélange de protéines comprend un ou plusieurs parmi le glycomacropeptide (GMP), l'alpha-lactalbumine (ALA), l'immunoglobuline G (IgG) et/ou la bêta-lactoglobuline (BLG).

7. Procédé selon la revendication 1, dans lequel ladite ultrafiltration atteint une perméabilité hydraulique d'environ 200 litres par heure par mètre carré par bar, d'environ 250 litres par heure par mètre carré par bar ou d'environ 300 litres par heure par mètre carré par bar.

8. Procédé selon la revendication 1, dans lequel ladite ultrafiltration atteint un coefficient de criblage des protéines d'environ 0,05, d'environ 0,03 ou d'environ 0,01.

9. Procédé selon la revendication 1, dans lequel ladite membrane d'ultrafiltration a une charge négative d'environ 10 milliéquivalents par mètre carré, de plus de 25 milliéquivalents par mètre carré, de plus de 50 milliéquivalents par mètre carré ou de plus de 100 milliéquivalents par mètre carré.

10. Procédé selon la revendication 1, dans lequel : (i) ladite membrane d'ultrafiltration chargée négativement a un seuil de coupure du poids moléculaire de 100 à 1 000 kDa, et dans lequel ladite membrane d'ultrafiltration a une charge négative de 3 à 100 milliéquivalents par mètre carré ; ou (ii) ladite membrane d'ultrafiltration chargée négativement a un seuil de coupure du poids moléculaire de 300 à 1 000 kDa, et dans lequel ladite membrane d'ultrafiltration a une charge négative de 10 à 100 milliéquivalents par mètre carré.

11. Procédé selon la revendication 1, comprenant en outre l'ajustement du pH du mélange de protéines avant l'étape (b) et/ou comprenant en outre l'ajustement de la conductivité du mélange de protéines avant l'étape (b).

12. Procédé selon la revendication 1, dans lequel la membrane a un seuil de coupure du poids moléculaire de 100 à 300 kDa, une charge négative de 5 à 30 milliéquivalents par mètre carré, une perméabilité hydraulique de 120 à 250 litres par mètre carré et un coefficient de criblage des protéines de 0,00 à 0,05.

13. Procédé selon la revendication 12, dans lequel le mélange de protéines est du lactosérum ou du petit-lait à son pH et à sa conductivité naturels.
